# EUROPÄISCHE PATENTANMELDUNG

(11) **EP 4 617 725 A1**
(43) Veröffentlichungstag der Anmeldung: **17.09.2025**
(21) Anmeldenummer: 25159556.7
(22) Anmeldetag: 24.02.2025
(51) Int. Cl.: G01S 13/88, G01S 13/89, G01S 7/24, G01S 7/41, G01S 13/86

(54) **VERFAHREN ZUM BETREIBEN EINES MESSGERÄTS**

(30) Priorität: 11.03.2024 DE 102024202238
(71) Anmelder: Robert Bosch GmbH, 70442 Stuttgart (DE)
(72) Erfinder: Troeltzsch, Uwe, 51503 Roesrath (DE); Steuler, Jan Linus, 61200 Woelfersheim (DE); Koelsch, Andreas, 86971 Peiting (DE); Sgarz, Heiko, 71229 Leonberg (DE); Law, Kakit, 72760 Reutlingen (DE); Giliard, Anke, 70180 Stuttgart (DE); Krane, Stephan, 76744 Woerth Am Rhein (DE); Fiederer, Lukas, 72336 Balingen (DE); Winterhalter, Juergen, 70191 Stuttgart (DE); Lingadahalli Vittal, Sachin, 68519 Viernheim (DE); Brand, Michael, 12049 Berlin (DE); Moster, Benjamin, 75223 Niefern-Oeschelbronn (DE); Messner, Jonas, 70597 Stuttgart (DE); Frischen, Andreas, 71229 Leonberg (DE)

(57) **Zusammenfassung**

Die Erfindung betrifft ein Computerimplementiertes Verfahren (200) zum Betreiben eines Messgeräts (100), insbesondere eines Wanddiagnosegeräts, umfassend:
Empfangen (201) von Radardaten (103) einer Radarsensoreinheit (101) des Messgeräts (100), wobei die Radardaten (103) eine zu diagnostizierende Wand (105) abbilden;
Ausführen (203) einer Wanddiagnose durch Ausführen einer Analyse der Radardaten (103) und Bereitstellen von Diagnoseergebnissen (109) durch ein Diagnosemodul (107) des Messgeräts (100), wobei die Wanddiagnose umfasst: Ausführen (205) einer Objekterkennung eines in der Wand (105) angeordneten Objekts (113) durch das Diagnosemodul (107), wobei die Objekterkennung eine Objektdetektion und eine Objektklassifikation umfasst; und
Bereitstellen (207) der Diagnoseergebnisse (109) des Diagnosemoduls (107) an eine Anzeigeeinheit (111) des Messgeräts (100) zum Anzeigen der Diagnoseergebnisse (109) einem Nutzer des Messgeräts (100), wobei Diagnoseergebnisse (109) wenigstens eine Objektposition (115) in der Wand (105) und ein Objekttyp (117) des Objekts (113) umfassen.

## Beschreibung

Die vorliegende Erfindung betrifft ein Verfahren zum Betreiben eines Messgeräts, insbesondere eines Wanddiagnosegeräts.

### Stand der Technik

Aus dem Stand der Technik sind Diagnosegeräte zum Diagnostizieren von Wänden und zum Detektieren von in den Wänden ausgebildeten Objekten bekannt.

Es ist eine Aufgabe der vorliegenden Erfindung, ein verbessertes Verfahren zum Betreiben eines Messgeräts, insbesondere eines Wanddiagnosegeräts bereitzustellen.

Die Aufgabe wird durch das Verfahren des Anspruchs 1 gelöst. Vorteilhafte Ausführungsformen sind Gegenstand der abhängigen Ansprüche.

Nach einem Aspekt wird ein Computerimplementiertes Verfahren zum Betreiben eines Messgeräts bereitgestellt, insbesondere eines Wanddiagnosegeräts, umfassend:
Empfangen von Radardaten einer Radarsensoreinheit des Messgeräts, wobei die Radardaten eine zu diagnostizierende Wand abbilden;
Ausführen einer Wanddiagnose durch Ausführen einer Analyse der Radardaten und Bereitstellen von Diagnoseergebnissen durch ein Diagnosemodul des Messgeräts, wobei die Wanddiagnose umfasst:
   Ausführen einer Objekterkennung eines in der Wand angeordneten Objekts durch das Diagnosemodul, wobei die Objekterkennung eine Objektdetektion und eine Objektklassifikation umfasst; und
   Bereitstellen der Diagnoseergebnisse des Diagnosemoduls an eine Anzeigeeinheit des Messgeräts zum Anzeigen der Diagnoseergebnisse einem Nutzer des Messgeräts, wobei Diagnoseergebnisse wenigstens eine Objektposition in der Wand und einen Objekttyp des Objekts umfassen.

Hierdurch kann der technische Vorteil erreicht werden, dass ein verbessertes Verfahren zum Betreiben eines Messgeräts, insbesondere Eines Wanddiagnosegeräts, bereitgestellt werden kann. Hierzu wird basierend auf eine zu diagnostizierende Wand abbildenden Radardaten wenigstens einer Radarsensoreinheit des Messgeräts durch ein Diagnosemodul eine Wanddiagnose ausgeführt. Die Wanddiagnose umfasst hierzu eine Objekterkennung, wenigstens eines in der Wand angeordneten Objekts durch das Diagnosemodul.

Die Objekterkennung umfasst eine Objektdetektion und eine Objektklassifikation. Die Objektdetektion umfasst wiederum die Bestimmung einer Objektposition des Objekts innerhalb der Wand und die Objektklassifikation umfasst das Bestimmen eines Objekttyps des in der Wand angeordneten Objekts. Die wenigstens die Objektposition und den Objekttyp des Objekts umfassenden Diagnoseergebnisse der Wanddiagnose werden ferner in einer Anzeigeeinheit des Messgeräts angezeigt. Durch das entsprechend ausgebildete Diagnosemodul kann eine Wanddiagnose inklusive der oben beschriebenen Objekterkennung ausschließlich basierend auf Radardaten der Radarsensoreinheit ausgeführt werden.

Indem das Diagnosemodul auf die entsprechende Objekterkennung inklusive der Objektdetektion und Objektklassifikation ausschließlich basierend auf den Radardaten eingerichtet ist, kann zur Objekterkennung darauf verzichtet werden, zusätzliche Sensorinformationen zusätzlicher Sensoren berücksichtigen zu müssen. Hierdurch kann das Messgerät schlanker ausgestaltet werden, indem auf zusätzliche Sensoren neben der Radarsensoreinheit verzichtet werden kann.

Nach einer Ausführungsform umfasst die Wanddiagnose ferner:
Ausführen einer Wandtypenklassifikation und Bestimmen eines Wandtyps der Wand durch das Diagnosemodul.

Hierdurch kann der technische Vorteil erreicht werden, dass neben der Objekterkennung ferner eine Wandtypenklassifikation ausschließlich basierend auf den Radardaten der Radarsensoreinheit durchgeführt werden kann. In der Wandtypenklassifikation können verschiedene Wandtypen der zu untersuchenden Wände durch das entsprechend eingerichtete Diagnosemodul bestimmt bzw. klassifiziert werden. Durch die automatische Wandtypenklassifizierung muss der Nutzer nicht extra den jeweiligen Wandtyp der zu untersuchenden Wand als Zusatzinformation für die Wanddiagnose eingeben, wie dies aus dem Stand der Technik bekannt ist, sondern der Wandtyp wird durch das Diagnosemodul automatisch basierend auf den Radardaten der Radarsensoreinheit ermittelt.

Der Wandtyp kann als Zusatzinformation, beispielsweise für eine Hintergrundkorrektur, in die Wanddiagnose und die Objekterkennung einfließen. Alternativ oder zusätzlich kann der detektierte Wandtyp als Diagnoseergebnis dem Nutzer in der Anzeigeeinheit als zusätzliche Information angezeigt werden.

Nach einer Ausführungsform umfasst die Wanddiagnose ferner:
Ausführen einer Objekttiefenbestimmung und Bestimmen einer Objekttiefe des Objekts in der Wand durch das Diagnosemodul, wobei die Objekttiefe als ein Abstand des Objekts zu einer Oberfläche der Wand definiert ist.

Hierdurch kann der technische Vorteil erreicht werden, dass durch das Messgerät basierend auf den Radardaten der Radarsensoreinheit neben der Objekterkennung eine Objekttiefe des Objekts innerhalb der Wand bestimmbar ist. Die Objekttiefe beschreibt hierbei einen Abstand des Objekts zu einer Oberfläche der Wand. Durch das entsprechend eingerichtete Diagnosemodul kann die Objekttiefe ausschließlich basierend auf den Radardaten der Radarsensoreinheit ermittelt werden.

Nach einer Ausführungsform umfasst die Analyse der Radardaten ferner: Ausführen einer Objektausdehnungsbestimmung und Bestimmen einer Objektausdehnung des Objekts entlang einer vordefinierten Richtung durch das Diagnosemodul.

Hierdurch kann der technische Vorteil erreicht werden, dass basierend auf den Radardaten der Radarsensoreinheit ferner eine Objektausdehnung des in der Wand befindlich detektierten Objekts ermöglicht ist. Die Objektausdehnung beschreibt hierbei eine Ausdehnung des Objekts wenigstens in Bezug auf eine Raumrichtung, bevorzugt in Bezug auf zwei Raumrichtungen, besonders bevorzugt in Bezug auf drei Raumrichtungen. Dies ermöglicht eine eindimensionale, bevorzugt zweidimensionale, besonders bevorzugt dreidimensionale Ausdehnungsinformation des in der Wand befindlichen Objekts.

Nach einer Ausführungsform umfasst die Wanddiagnose ferner:
Ausführen einer Vorverarbeitung der Radardaten der Radarsensoreinheit und Bereitstellen von Eingabedaten für ein Wandtypenklassifizierungsmodul des Diagnosemoduls durch ein erstes Vorverarbeitungsmodul;
Ausführen der Wandtypenklassifikation basierend auf den durch das erste Vorverarbeitungsmodul bereitgestellten Eingabedaten und Bereitstellen einer Wandtypinformation durch ein Wandtypenklassifizierungsmodul des Diagnosemoduls;
Ausführen einer Vorverarbeitung der Radardaten und Bereitstellen von Eingabedaten für ein Objekterkennungsmodul des Diagnosemoduls unter Berücksichtigung der Wandtypinformation durch ein zweites Vorverarbeitungsmodul des Diagnosemoduls;
Ausführen der Objekterkennung basierend auf den durch das zweite Vorverarbeitungsmodul bereitgestellten Eingabedaten und Bereitstellen von Diagnoseergebnissen durch das Objekterkennungsmodul.

Hierdurch kann der technische Vorteil erreicht werden, dass eine präzise Wanddiagnose durch das entsprechend ausgebildete Diagnosemodul auf den Radardaten der Radarsensoreinheit ermöglicht ist.

Durch die Vorverarbeitung der Radardaten der Radarsensoreinheit können die Radardaten in die für die Wanddiagnose benötigte Form gebracht werden. Durch ein entsprechend ausgebildetes Wandtypklassifizierungsmodul kann auf den vorverarbeiteten Radardaten eine entsprechende Wandtypklassifikation ausgeführt und der jeweilige Wandtyp der Wand bestimmt werden.

Durch ein Objekterkennungsmodul kann basierend auf den vorverarbeiteten Radardaten und unter Berücksichtigung des durch das Wandtypklassifizierungsmodul bereitgestellten Wandtyps eine Objekterkennung eines in der Wand angeordneten Objekts ausgeführt werden. Das Objekterkennungsmodul ist hierbei eingerichtet, basierend auf den vorverarbeiteten Radardaten und unter Berücksichtigung des bereitgestellten Wandtyps eine Objektdetektion und eine Objektklassifikation des in der Wand angeordneten Objekts durchzuführen. Die vorgestellte Architektur des Diagnosemoduls erlaubt eine möglichst präzise und zuverlässige Wanddiagnose von zu untersuchenden Wänden.

Nach einer Ausführungsform werden Radardaten von einer Mehrzahl von Positionen des Messgeräts relativ zur Wand empfangen werden, und wobei das Verfahren ferner umfasst:
Empfangen von Bewegungsdaten einer Bewegungserfassungseinheit des Messgeräts, wobei die Bewegungsdaten eine Bewegung des Messgeräts relativ zur Wand zwischen der Mehrzahl von Positionen des Messgeräts relativ zur Wand abbilden.

Hierdurch kann der technische Vorteil erreicht werden, dass durch die Berücksichtigung von Bewegungsdaten einer Bewegungserfassungseinheit die Wanddiagnose für verschiedene Positionen des Messgeräts relativ zur Wand ausgeführt werden kann. Die Bewegungsdaten bilden hierbei eine Bewegung des Messgeräts zwischen einer Mehrzahl von Positionen des Messgeräts relativ zur Wand ab. Die Berücksichtigung der Bewegungsdaten ermöglicht somit eine genaue Positionierung bzw. Positionsbestimmung des Messgeräts relativ zur Wand. Hierauf basierend kann die Wanddiagnose Positionsabhängig für die verschiedenen Positionen des Messgeräts relativ zur Wand durchgeführt werden.

Ferner kann die Bewegung des Messgeräts zwischen den verschiedenen Positionen relativ zur Wand basierend auf den Bewegungsdaten realisiert werden. Dies ermöglicht eine Wanddiagnose während des Bewegens des Messgeräts relativ zur Wand, sodass durch die Wanddiagnose ein größerer Raumbereich der Wand untersucht werden kann, als dies durch den Wirkbereich der Radarsensoreinheit ermöglich wäre. Dies beschleunigt die Wanddiagnose und ermöglicht eine präzisere Untersuchung eines Zusammenhängenden Raumbereichs der zu untersuchenden Wand.

Nach einer Ausführungsform umfasst das Verfahren ferner:
Überprüfen basierend auf den Bewegungsdaten der Bewegungserfassungseinheit, ob eine Bewegung des Messgeräts relativ zur Wand um eine vordefinierte Entfernung erfasst wurde;
Falls keine Bewegung erfasst wurde, Speichern der Radardaten und erneutes Ausführen der Überprüfung;
Falls eine Bewegung um die vordefinierte Entfernung erfasst wurde, Ausführen der Wanddiagnose basierend auf den Radardaten durch das Diagnosemodul.

Hierdurch kann der technische Vorteil erreicht werden, dass die Wanddiagnose in vorbestimmten Abständen während der Bewegung des Messgeräts relativ zur Wand ausgeführt wird. Die Wanddiagnose wird hierbei auf den Radardaten ausgeführt, die durch das Messgerät während der Bewegung relativ zur Wand um die vordefinierte Entfernung aufgenommen wurden. Die zu untersuchende Wand kann somit innerhalb der Wanddiagnose durch das Messgerät gemäß der vordefinierten Entfernung abgetastet werden. Dies ermöglicht eine präzise Wanddiagnose eines ausgedehnten Raumbereichs der zu untersuchenden Wand.

Nach einer Ausführungsform umfasst die Wanddiagnose ferner: Zusammenfassen von basierend auf Radardaten, die in verschiedenen Positionen des Messgeräts relativ zur Wand empfangen wurden, detektierten und klassifizierten Teilobjekten zu einem zusammenhängenden Objekt, falls zwischen den Teilobjekten eine vordefinierte Abstandsabhängigkeit besteht.

Hierdurch kann der technische Vorteil erreicht werden, dass durch das Zusammenfassen der basierend auf den Radardaten in den verschiedenen Positionen des Messgeräts relativ zur Wand detektierten und klassifizierten Teilobjekten zu einem zusammenhängenden Objekt eine präzise Wanddiagnose inklusive einer präzisen Objekterkennung ermöglich ist. Während des Bewegens des Messgeräts relativ zur Wand wird die Wanddiagnose gemäß den oben beschriebenen Ausführungsformen ausgeführt.

Für die gemäß den vordefinierten Entfernungen definierten Bewegungsabschnitte werden die durch das Diagnosemodul während der Wanddiagnose Teilergebnisse, sprich Teilobjekte des zu erkennenden Objekts innerhalb der Wand, ermittelt. Die klassifizierten Teilobjekte beschreiben hierbei Teile eines ausgedehnten Objekts, das durch die Bewegung des Messgeräts relativ zur Wand in Teilabschnitten der Bewegung abgebildet wird. Durch das Zusammenfassen der entsprechend klassifizierten Teilobjekte zu einem Gesamtobjekt kann das ausgedehnte Objekt detailliert beschrieben und erkannt werden. Dies ermöglicht eine präzise Wanddiagnose und das Erkennen von ausgedehnten Objekten.

Nach einer Ausführungsform umfasst das Messgerät ferner wenigstens einen Induktionssensor und/oder einen Wirbelstromsensor und/oder einen Kapazitätssensor und/oder Wechselstromsensor und/oder ein NMR-Sensor und/oder einen Ultraschallsensor zum Bereitstellen zusätzlicher Sensordaten, wobei das Diagnosemodul eingerichtet ist, die Wanddiagnose unter Berücksichtigung der zusätzlichen Sensordaten auszuführen.

Hierdurch kann der technische Vorteil erreicht werden, dass durch weitere Sensordaten zusätzlicher Sensoren, die jeweils eingerichtet sind, unterschiedliche physikalische Messgrößen zu detektieren, zusätzliche Information zuzüglich zu den Informationen der Radardaten der Radarsensoreinheit in die Wanddiagnose einfließen können. Diese zusätzlichen und zu den Informationen der Radardaten der Radarsensoreinheit vorzugsweise komplementären Information ermöglichen eine weitere Präzisierung der Wanddiagnose bzw. der Objekterkennung.

Nach einer Ausführungsform umfasst das Diagnosemodul wenigstens eine entsprechend trainierte künstliche Intelligenz, die eingerichtet ist, basierend auf den Radardaten und/oder den zusätzlichen Sensordaten eine Objekterkennung und/oder eine Wandklassifikation und/oder eine Objekttiefenbestimmung durchzuführen.

Hierdurch kann der technische Vorteil erreicht werden, dass durch die Ausbildung des Diagnosemoduls als eine entsprechend trainierte künstliche Intelligenz, die darauf trainiert ist, basierend auf den Radardaten, bzw. gegebenenfalls unter Berücksichtigung der Information der zusätzlichen Sensoren, eine Objekterkennung und/oder eine Wandklassifikation und/oder eine Objekttiefenbestimmung und/oder eine Objektausdehnungsbestimmung auszuführen, ein zuverlässiges und leistungsfähiges Diagnosemodul bereitgestellt werden kann. Durch die Verwendung der Technik der künstlichen Intelligenz kann eine präzise Wanddiagnose bereitgestellt werden.

Nach einem Aspekt wird eine Recheneinheit bereitgestellt, die eingerichtet ist, das Verfahren zum Betreiben eines Messgeräts nach einer der voranstehenden Ausführungsformen auszuführen.

Nach einem Aspekt wird ein Computerprogrammprodukt umfassend Befehle bereitgestellt, die bei der Ausführung des Programms durch eine Datenverarbeitungseinheit diese veranlassen, das Verfahren zum Betreiben eines Messgeräts nach einer Ausführungsformen auszuführen.

Ausführungsformen der Erfindung sind mit Bezug auf die folgenden Figuren beschrieben. Die Figuren zeigen:
- Fig. 1: eine schematische Darstellung eines Messgeräts gemäß einer Ausführungsform;
- Fig. 2: eine weitere schematische Darstellung des Messgeräts gemäß einer weiteren Ausführungsform;
- Fig. 3: eine weitere schematische Darstellung des Messgeräts gemäß einer weiteren Ausführungsform;
- Fig. 4: eine schematische Darstellung einer Messung des Messgeräts gemäß einer Ausführungsform,
- Fig. 5: eine weitere schematische Darstellung des Messgeräts gemäß einer weiteren Ausführungsform;
- Fig. 6: ein Flussdiagramm eines Verfahrens zum Betreiben eines Messgeräts gemäß einer Ausführungsform,
- Fig. 7: ein weiteres Flussdiagramm des Verfahrens zum Betreiben eines Messgeräts gemäß einer weiteren Ausführungsform,
- Fig. 8: ein weiteres Flussdiagramm des Verfahrens zum Betreiben eines Messgeräts gemäß einer weiteren Ausführungsform, und
- Fig. 9: eine schematische Darstellung eines Computerprogrammprodukts.

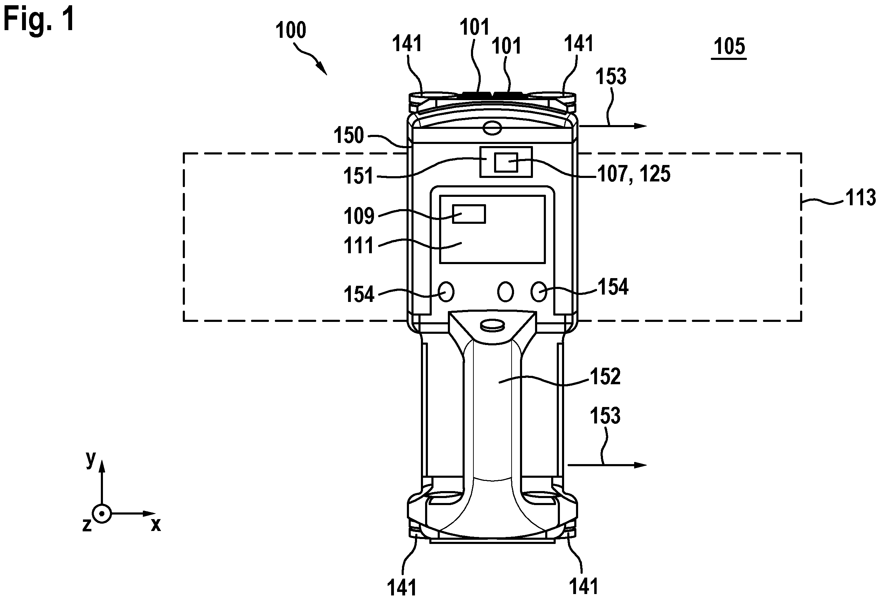

Fig. 1 zeigt eine schematische Darstellung eines Messgeräts 100 gemäß einer Ausführungsform.

Die vorliegende Erfindung betrifft ein Messgerät, insbesondere ein Wanddiagnosegerät für Untersuchungen von zu bearbeitenden Wänden 105. Im Stand der Technik sind Wanddiagnosegeräte bekannt, die dazu verwendet werden, in Wänden angeordnete Objekte zu detektieren. Derartige Geräte erlauben es einem Nutzer zu bearbeitende Wände nach in den Wänden angeordnete Objekte zu untersuchen, um hierauf basierend die geplanten Arbeiten, beispielsweise das Bohren in Wände, derart ausführen zu können, dass Beschädigungen der in den Wänden angeordnete Objekte vermieden werden können.

In der gezeigten Ausführungsform umfasst das Messgerät 100 ein Gehäuse 150 mit einem Griff 152 zum Greifen des Messgeräts 100 durch einen Nutzer, einer Anzeigeeinheit 111 zum Anzeigen von Diagnoseergebnissen 109 der Wanddiagnose und Bedienelemente 154 zum Schalten des Messgeräts 100 in verschiedene Betriebsmodi ausgebildet.

Erfindungsgemäß umfasst das Messgerät 100 wenigstens eine Radarsensoreinheit 101. Mittels der Radarsensoreinheit 101 können Radarsignal in Richtung der zu untersuchenden Wand 105 ausgesendet und von der Wand 105 reflektierte Radarsignale empfangen werden.

Die Radarsensoreinheit 101 kann beispielsweise als ein schmalbandiges Radardetektorgerät im Frequenzbereich 2,4 GHz bis 2,4835 GHz oder als ein ultrabreitbandiges Radardetektorgerät im Frequenzbereich 1,8 GHz bis 5, 8 GHz ausgebildet sein.

Das Messgerät 100 umfasst zur Ausführung der Wanddiagnose ferner ein Diagnosemodul 107, das auf einer Recheneinheit 151 des Messgeräts 100 ausführbar ist. Das Diagnosemodul 107 ist eingerichtet, basierend auf den Radardaten 103 der Radarsensoreinheit 101 eine entsprechende Diagnose der zu untersuchenden Wand auszuführen. Die Radardaten 103 der Radarsensoreinheit 101 bilden hierbei die zu untersuchende Wand 105 und gegebenenfalls innerhalb der Wand 105 angeordnete Objekte 113 ab.

Die durch das Diagnosemodul 107 ausgeführte Wanddiagnose umfasst hierbei wenigstens das Ausführen einer Objekterkennung. Die Objekterkennung umfasst hierbei eine Objektdetektion und eine Objektklassifikation des in der Wand 105 angeordneten Objekts 113. Die Objektdetektion umfasst hierbei wenigstens die Bestimmung einer Objektposition 115. Die Objektposition beschreibt hierbei die Positionierung des in der Wand 105 angeordneten Objekts in Bezug auf ein durch das Messgerät 100 festgelegtes Bezugssystem. Die Objektklassifikation des detektierten Objekts 113 umfasst wenigstens die Bestimmung eines Objekttyps 117 des detektierten Objekts 113.

Die derart bestimmten Diagnoseergebnisse der Wanddiagnose, sprich wenigstens die bestimmte Objektposition 115 und/oder der bestimmte Objekttyp 117 des in der Wand 105 angeordneten Objekts 113, werden darauffolgend in einer Anzeigeeinheit 111 des Messgeräts 100 einem Nutzer des Messgeräts 100 dargestellt. Die Anzeigeeinheit 111 kann beispielsweise als ein entsprechendes Display ausgebildet sein und die Diagnoseergebnisse 109 können visuell angezeigt werden. Zusätzlich kann die Anzeige der Diagnoseergebnisse 109 über akustische und/oder haptische Signale unterstützt werden. Die haptischen Signale können beispielsweise über entsprechende Vibrationssignale realisiert sein.

Das Objekt 113 kann hierbei beispielsweise durch ein entsprechendes Symbol im Display angezeigt werden. Das Objekt 113 kann hierbei in der entsprechenden Objektposition 115 in dem Display angezeigt werden. Die Objektausdehnung 121 kann durch eine entsprechende Größe des angezeigten Symbols visualisiert sein. Der jeweilige Objekttyp 117 des Objekts 113 kann mit einem entsprechenden Begriff oder einer farblichen Unterlegung des Symbols oder durch eine spezielle Form des das Objekt 113 repräsentierenden Symbols visualisiert werden.

Alternativ kann die Wanddiagnose zusätzlich die Bestimmung eines Wandtyps 123 in Form einer Wandtypenklassifikation der zu untersuchenden Wand 105 umfassen. Der Wandtyp 123 beschreibt hierbei den jeweiligen Typ der zu untersuchenden Wand 105. Der Wandtyp kann beispielsweise entsprechenden Wandtypklassen zugeordnet werden, die umfassen können: Betonwand, Leichtbau- /Trockenbauwand, gemauerte Wand und/oder von vermauerten Steinen der Wand, Fußbodenheizung, Wandheizung oder ähnlichen Gebäuden vorzufinden Wandtypen.

Gemäß einer Ausführungsform ist das Diagnosemodul 107 ferner eingerichtet, basierend auf den Radardaten 103 einer Objekttiefe 119 des Objekts 113 innerhalb der Wand 105 zu bestimmen. Die Objekttiefe 119 ist hierbei durch einen Abstand des in der Wand 105 ausgebildeten Objekts zu einer Oberfläche der Wand 105 definiert. Der Abstand kann auf der Objektseite beispielsweise in Bezug auf eine Objektoberfläche oder in Bezug auf einen Objektmittelpunkt definiert sein. Der Abstand zur Oberfläche der Wand 105 beschreibt hierbei einen kürzesten Abstand, der durch einen zur Oberfläche der Wand 105 senkrecht Richtung definiert ist.

Gemäß einer Ausführungsform ist das Diagnosemodul 107 ferner eingerichtet, basierend auf den Radardaten 103 eine Objektausdehnung 121 des Objekts 113 in wenigstens einer vordefinierten Richtung zu bestimmen. Die Objektausdehnung 121 des Objekts 113 beschreibt hierbei eine räumliche Ausdehnung des Objekts 113 in wenigstens einer Raumrichtung, vorzugsweise in zwei Raumrichtungen, besonders bevorzugt in drei Raumrichtungen. Das Objekt 113 kann hierdurch als ein eindimensionales, zweidimensionales oder dreidimensionales Objekt 113 beschrieben werden.

In der üblichen Verwendung wird das Messgerät 100 an der Wandoberfläche der zu untersuchenden Wand 105 platziert. Über die Radarsensoreinheit 101 werden Radarsignale in Richtung der Wand 105 ausgesendet und von der Wand 105 bzw. den danach angeordneten Objekten 113 reflektierte Radarsignale empfangen. Auf diesen Radardaten 103 der Radarsensoreinheit 101 wird durch das Diagnosemodul 107 die oben beschriebene Wanddiagnose ausgeführt und es werden entsprechende Diagnoseergebnisse 109 ermittelt.

Die Diagnoseergebnisse 109 können beispielsweise die Objektposition 115 und/oder den Objekttyp 117 des in der Wand 105 angeordneten Objekts 113 umfassen. Alternativ oder zusätzlich können die Diagnoseergebnisse 109 den Wandtyp 123 der Wand 105 und/oder die Objekttiefe 119 und/oder die Objektausdehnung 121 des Objekts 113 umfassen.

Die derart ausgestalteten Diagnoseergebnisse 109 können darauffolgend einen Nutzer des Messgeräts 100 in einer Anzeigeeinheit 111 des Messgeräts 100 angezeigt werden. Die Anzeigeeinheit 111 kann beispielsweise als ein entsprechendes Display ausgebildet sein. Die Diagnoseergebnisse 109 können in der Anzeigeeinheit 111 in graphischer Form oder in Textform angezeigt sein.

Gemäß einer Ausführungsform umfasst das Messgerät 100 ferner eine Bewegungserfassungseinheit 141. Mit der Bewegungserfassungseinheit 141 kann eine Bewegung des Messgeräts 100 relativ zur Wand 105 erfasst werden. Die Bewegungserfassungseinheit 141 kann hierzu beispielsweise wenigstens ein Rollenelement aufweisen. Bei Auflage des Rollenelements auf der Wandoberfläche der Wand 105 kann bei Bewegung des Messgeräts 100 entlang einer Bewegungsrichtung 153 durch Abrollen des Rollenelements die Bewegung des Messgeräts 100 relativ zur Wand 105 erfasst werden. Alternativ hierzu kann die Bewegungserfassungseinheit 141 eine andere Ausgestaltung aufweisen, mittels der eine relative Bewegung des Messgeräts 100 relativ zur Wand 105 erfassbar ist.

Durch die Bewegung des Messgeräts 100 relativ zur Wand 105 können Radardaten 103 der Radarsensoreinheit 101 für eine Mehrzahl verschiedener Positionierungen des Messgeräts 100 relativ zur Wand 105 aufgenommen werden. Dies ermöglicht eine Untersuchung der Wand 105 in einem größeren Raumbereich, als dies durch den Wirkbereich der Radarsensoreinheit 101 gegeben ist. Dies ermöglicht das Erfassen von Objekten 113, die eine größere räumliche Ausdehnung aufweisen, als der Wirkbereich der Radarsensoreinheit 101.

Während der Bewegung des Messgeräts 100 entlang der Bewegungseinrichtung 153 können durchgehend Radardaten 103 der Radarsensoreinheit 101 aufgenommen werden. Die Wanddiagnose kann basierend auf diesen Radardaten 103 während des Bewegens des Messgeräts 100 entlang der Bewegungsrichtung 153 durch das Diagnosemodul 107 ausgewertet werden. Dies ermöglicht eine beschleunigte Wanddiagnose, die ihre Positionierung des Messgeräts 100 relativ zur Wand 105 berücksichtigt.

Gemäß seiner Ausführungsform ist das Diagnosemodul 107 als eine entsprechende trainierte künstliche Intelligenz 125 ausgebildet. Die künstliche Intelligenz 125 ist hierbei wenigstens darauf trainiert, basierend auf den Radardaten 103 der Radarsensoreinheit 101 die oben beschriebene Wanddiagnose auszuführen und wenigstens die Objektposition 115 und den Objekttyp 117 eines in der Wand 105 angeordneten Objekts 113 zu bestimmen. Die Objektklassifizierung bzw. das Bestimmen des Objekttyps 117 umfasst hierbei das Zuordnen des detektierten Objekts 113 in vordefinierte Objektklassen.

Die Objektklassen können hierbei umfassen: Metall- /Nichtmetallobjekt Kabel für Niederspannung, Kabel mit einphasigem AC-Signal, Kabel mit mehrphasigen AC-Signa, Holzträger, Metallträger, Kunststoffrohr, wassergefülltes Kunststoffrohr, beispielsweise Frischwasserrohr, nicht wassergefülltes Kunststoffrohr, beispielsweise Abwasserrohr oder andere in Gebäudewänden übliche verbaute Elemente.

Ferner kann die künstliche Intelligenz 125 darauf trainiert sein, wenigstens auf den Radardaten 103 der Radarsensoreinheit 101 den Wandtyp 123 der zu untersuchenden Wand 105 zu bestimmen. Mögliche Wandtypen 123 können hierbei umfassen: Betonwand, Leichtbau- /Trockenbauwand, gemauerte Wand und/oder einzelne Steine der gemauerten Wand, Fußbodenheizung, Wandheizung oder andere übliche in Gebäuden verbaute Wandtypen.

Gemäß einer Ausführungsform kann das Messgerät 100 neben der Radarsensoreinheit 101 weitere zusätzliche Sensoren umfassen, mittels denen zusätzliche physikalische Größen detektierbar sind. Beispielsweise kann das Messgerät 100 einen Induktionssensor und/oder einen Wirbelstromsensor und/oder Kapazitätssensor und/oder einen Wechselstromsensor und/oder einen NMR-Sensor und/oder einen Ultraschallsensor oder andere in Wanddiagnosegeräten üblich verbaute Sensoren umfassen.

Das Diagnosemodul 107, insbesondere die entsprechende trainierte künstliche Intelligenz 125, kann hierbei darauf eingerichtet sein, basierend auf den Radardaten 103 der Radarsensoreinheit 101 und unter Berücksichtigung der zusätzlichen Sensorinformationen der weiteren Sensoren die oben beschrieben Wanddiagnose auszuführen. Die zusätzlichen Informationen der zusätzlichen oben genannten Sensoren können hierzu insbesondere zur Objekterkennung der in den Wänden 105 angeordneten Objekte 113 verwendet werden. Über die zusätzlichen Sensorinformationen kann gegebenenfalls eine verbesserte Detektion der Objekte 113 und gegebenenfalls eine verbesserte Klassifikation der Objekte 113 erreicht werden.

Insbesondere kann beispielsweise das Material der Objekte 113, beispielsweise als metallisches oder nichtmetallisches Material, durch die Verwendung der zusätzlichen Sensorinformation verbessert und klassifiziert werden.

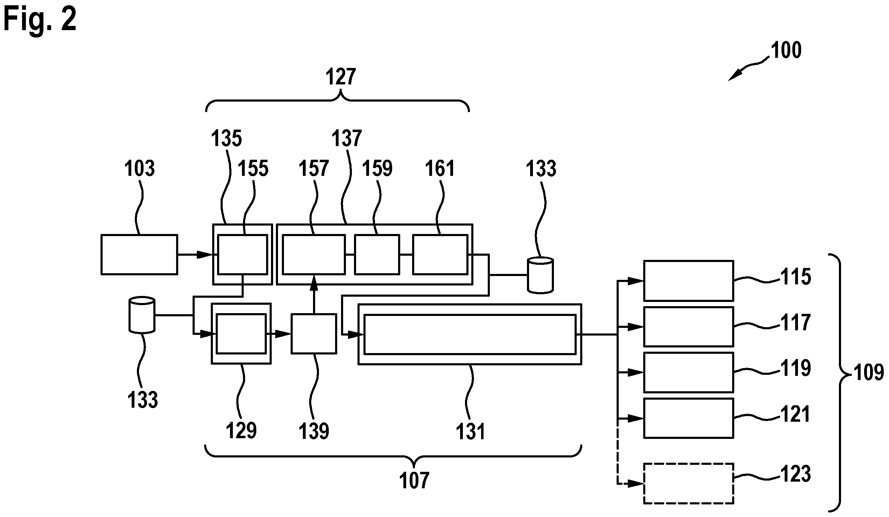

Fig. 2 zeigt eine weitere schematische Darstellung des Messgeräts 100 gemäß einer weiteren Ausführungsform.

In der gezeigten Ausführungsform umfasst das Messgerät 100 neben dem Diagnosemodul 107 ein Vorverarbeitungsmodul 127. Zur Wanddiagnose empfängt das Messgerät 100 zunächst die Radardaten 103 der Radarsensoreinheit 101. Über das Vorverarbeitungsmoduls 127 wird eine Vorverarbeitung der empfangenden Radardaten 103 ausgeführt. Über die Vorverarbeitung des Vorverarbeitungsmoduls 127 können die Radardaten beispielsweise in eine entsprechende für die Wanddiagnose durch das Diagnosemodul 107 benötigte Datenstruktur gebracht werden.

Wie oben beschrieben wird durch das Diagnosemodul 107 während der Wanddiagnose die oben beschriebenen Diagnoseergebnisse 109 erstellt. Die Diagnoseergebnisse 109 können hierbei beispielsweise die Objektposition 115 und/oder den Objekttyp 117 und/oder die Objekttiefe 119 und/oder die Objektausdehnung 121 eines in der zu untersuchenden Wand 105 ausgebildeten Objekts 113 und/oder den Wandtyp 123 der zu untersuchenden Wand 105 umfassen. Die entsprechend generierten Diagnoseergebnisse 109 können darauffolgend in der Anzeigeeinheit 111 des Messgeräts 100 angezeigt werden.

Gemäß einer Ausführungsform können zusätzlich zu den Radardaten 103 der Radarsensoreinheit 101 die oben beschriebenen zusätzlichen Sensorinformationen der zusätzlichen Sensoren in der Wanddiagnose des Diagnosemoduls 107 berücksichtigt werden. Eine entsprechende Vorverarbeitung der zusätzlichen Sensorinformationen durch das Vorverarbeitungsmodul 127 kann entsprechend ausgeführt werden.

In der gezeigten Ausführungsform umfasst das Diagnosemodul 107 ein Wandtypklassifizierungsmodul 129 und ein Objekterkennungsmodul 131. Das Vorverarbeitungsmodul 127 umfasst ein erstes Vorverarbeitungsmodul 135 und ein zweites Vorverarbeitungsmodul 137. Das erste Vorverarbeitungsmodul 135 umfasst eine S-Matrix Reduktion 155. Das zweite Vorverarbeitungsmodul 137 umfasst eine Hintergrundkorrektur 157, eine inverse Fast Fourier Transformation 159 und eine Fokussierung und Migration 161. In der Vorverarbeitung der Radardaten 103 durch das Vorverarbeitungsmodul 127 erfolgt zunächst eine Vorverarbeitung der Radardaten 103 durch das erste Vorverarbeitungsmodul 135 und die darin enthaltene S-Matrix Reduktion 155.

Das ersten Vorverarbeitungsmodul 135 erzeugt hierbei basierend auf den Radardaten 103 Eingabedaten 133. Die Eingabedaten 133 dienen als Eingabedaten für das Wandtypklassifizierungsmodul 129. Das Wandtypklassifizierungsmodul 129 führt hierbei basierend auf den Eingabedaten 133 eine Wandtypenklassifizierung der zu untersuchenden Wand 105 aus und generiert eine Wandtypinformation 139. In der Wandtypinformation 139 ist der in der Wandtypenklassifizierung bestimmte Wandtyp 123 der zu untersuchenden Wand 105 enthalten.

Darauffolgend wird das zweite Vorverarbeitungsmodul 137 basierend auf den Radardaten 103 und der Wandtypinformation 139 eine Vorverarbeitung ausgeführt. Hierbei wird unter Berücksichtigung des in der Wandtypinformation 139 ermittelten Wandtyps 123 eine Hintergrundkorrektur 157 der Radardaten 103 ausgeführt. Je nach Wandtyp 123 der zu untersuchenden Wand 105 können unterschiedliche Effekte auf die Radardaten 103 auftreten.

Durch die Hintergrundkorrektur 157 können diese Effekte, die primär auf dem jeweiligen Wandtyp 123 basieren und eine Objekterkennung beeinflussen können, korrigiert werden. Nach ausgeführter Hintergrundkorrektur kann durch Ausführung der inversen Fast Fourier Transformation 159 bzw. der Fokussierung und Migration 161 eine weitere Vorverarbeitung ausgeführt werden und erneute Eingabedaten 133 für das Objekterkennungsmodul 131 erstellt werden. Basierend auf den durch das zweite Vorverarbeitungsmodul 137 bereit gestellten Eingabedaten 133 führt das Objekterkennungsmodul 133 die Objekterkennung des in der zu untersuchenden Wand 105 angeordneten Objekts 113 aus und bestimmt wenigstens die Objektposition 115 und den Objekttyp 117 des jeweiligen Objekts 113. Zusätzlich kann durch das Objekterkennungsmodul 131 die Objekttiefe 119 und die Objektausdehnung 121 bestimmt werden.

Nach einer Ausführungsform ist das Diagnosemodul ferner eingerichtet, basierend auf den Radardaten eine Objekttiefe des Objekts innerhalb der Wand zu bestimmen, wobei die Objekttiefe durch einen Abstand des in der Wand ausgebildeten Objekts zu einer Oberfläche der Wand definiert ist.

Die Vorverarbeitung ist hierbei optional. In Abhängigkeit des für das Diagnosemodul 107 verwendeten Algorithmus können komplett unverarbeitete Radarechos verschiedener Frequenzen als Radardaten 103 und als Eingabedaten für das Diagnosemodul 107 genutzt werden. Alternativ können über mehrere Schritte verarbeitete Radardaten 103 vorverwendet werden. Die Vorverarbeitungsschritte umfassen hierbei beispielsweise die Transformation der Signale vom Frequenzraum in den Zeit- oder Distanzraum, Hintergrundabzug, Entrauschung und Normalisierung der Signale. Bei Radardaten 103, die in Form von komplexen Zahlen vorliegen, kann ausschließlich der Absolutwert verarbeitet werden. Alternativ oder zusätzlich können die Phaseninformation berücksichtigt werden.

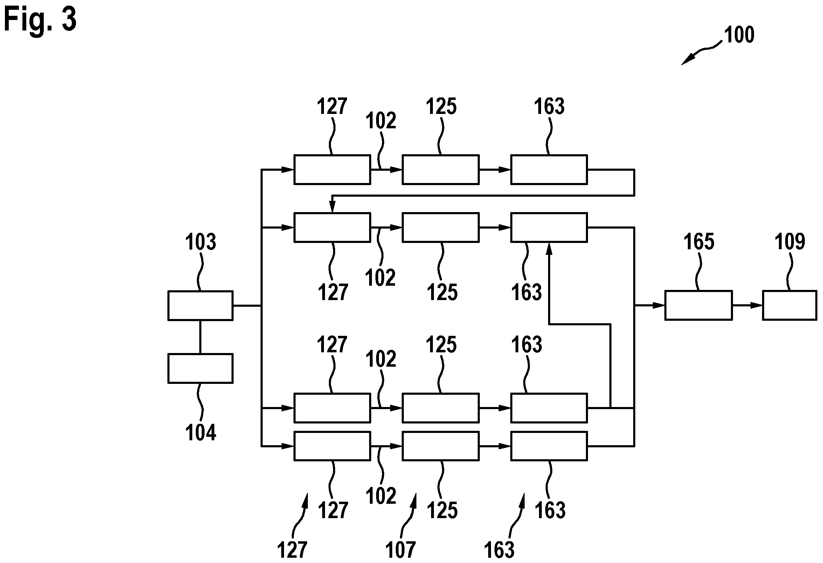

Fig. 3 zeigt eine weitere schematische Darstellung des Messgeräts 100 gemäß einer weiteren Ausführungsform.

In der gezeigten Ausführungsform umfasst das Diagnosemodul 107 eine Mehrzahl von parallel verlaufenden Verarbeitungspfaden 102. In jedem Verarbeitungspfad 102 ist ein Vorverarbeitungsmodul 127, das Diagnosemodul 107, beispielsweise umfassend das Wandtypklassifizierungsmodul 129 und/oder das Objekterkennungsmodul 131 gemäß der Ausführungsform in Fig, 2, und ein Nachverarbeitungsmodul 163.

In Fig. 3 werden primär die Radardaten 103 als Eingabedaten für die Wanddiagnose dargestellt. Zuzüglich zu den gezeigten Radardaten können jedoch auch die Zusatzinformationen der zusätzlichen Sensoren als Eingabedaten für die Wanddiagnose dienen. Hierbei können die unterschiedlichen Informationen der verschiedenen Sensortypen in den verschiedenen parallelen Verarbeitungspfaden 102 verarbeitet werden und die entsprechende Wanddiagnose getrennt auf den unterschiedlichen Sensorinformationen ausgeführt werden. Nach Abschluss der Wanddiagnose kann über ein Zusammenfassungsmodul eine Zusammenfassung der einzelnen Teilanalyseergebnisse zu den Diagnoseergebnissen 109 der Wanddiagnose zusammengefügt werden.

Alternativ oder zusätzlich können durch die verschiedenen Verarbeitungspfade 102 auch basierend auf den gleichen Sensorinformationen unterschiedliche Teilaspekte der Wanddiagnose durchgeführt werden.

Die einzelnen Verarbeitungspfade 102 können hierbei beispielsweise unterschiedliche Radardaten 103 verarbeiten, die während des Bewegens des Messgeräts 100 relativ zur Wand 105 für verschiedene Positionen des Messgeräts 100 relativ zur Wand 105 aufgenommen wurden. Die Radardaten 103, die somit unterschiedliche Bereiche der Wand 105 abbilden und zeitlich nacheinander während des Bewegens des Messgeräts 100 relativ zur Wand 105 aufgenommen wurde, können dann in den verschiedenen Verarbeitungspfaden 102 durch die gezeigten Module verarbeitet werden.

Die verschiedenen Verarbeitungspfade führen hierbei eine eigenständige Wanddiagnose durch, die wenigstens das Bestimmen der Objektposition 115 und/oder des Objekttyps 117 des in der Wand 105 angeordneten Objekts 113 umfassen.

Durch das Zusammenfassungsmodul 165 können die in den einzelnen Verarbeitungspfaden 102 bereitgestellten Teilergebnisse der eigenständigen Wanddiagnosen der unterschiedlichen Bereiche der Wand 105 einem zusammenhängenden Diagnoseergebnis 109 zusammengefasst werden. Das zusammenhängende Diagnoseergebnis beschreibt hierbei die Wanddiagnose eines zusammenhängenden Raumbereichs, der während des Bewegens des Messgeräts 100 relativ zur Wand 105 überstrichen und durch die entsprechenden aufgenommenen Radardaten 103 abgebildet wurde. Die parallele Verarbeitung der Radardaten 103 bzw. der zusätzlichen Sensorinformationen 104 der zusätzlichen Sensorelemente in den verschiedenen Verarbeitungspfaden 102 ermöglicht somit eine beschleunigte Wanddiagnose.

Alternativ hierzu können in den unterschiedlichen Verarbeitungspfaden 102 auch verschiedene Funktionen der Wanddiagnose ausgeführt werden. So kann beispielsweise in einem Verarbeitungspfad 102 die Wandtypenklassifizierung und das Bestimmen des Wandtypen 123 der zu untersuchenden Wand 105 ausgeführt werden. In einem weiteren Verarbeitungspfad 102 kann die Objekterkennung des in der Wand angeordneten Objekts 113 ausgeführt werden. Hierbei können die Objektdetektion mit der Bestimmung der Objektposition 115 und die Objektklassifikation mit der Bestimmung des Objekttypens 113 in einem Verarbeitungspfad 102 ausgeführt werden.

Alternativ hierzu kann dann auch die Objektdetektion und die Objektklassifikation in zwei getrennten Verarbeitungspfaden 102 ausgeführt werden. In weiteren Verarbeitungssträngen 102 können jeweils die Objekttiefenbestimmung, sprich die Bestimmung der Objekttiefe 119, und/oder die Bestimmung der Objektausdehnung 121 bewirkt werden. In dem Zusammenfassungsmodul 165 können die verschiedenen Teilergebnisse der Wanddiagnose in entsprechende Diagnoseergebnisse 109 zusammengefasst werden.

Das Diagnosemodul 107 kann hierbei in unterschiedliche künstliche Intelligenzen 125 aufgeteilt sein, wie dies bereits in der Ausführungsform in Fig. 2 dargestellt ist. Das Diagnosemodul 107 kann hierbei beispielsweise ein Wandtypenklassifizierungsmodul 129 und ein Objekterkennungsmodul 131 umfassen. Das Objekterkennungsmodul kann wiederum in ein Objektdetektionsmodul und ein Objektklassifikationsmodul aufteilt sein. Das Diagnosemodul 107 kann ferner ein Objekttiefenbestimmungsmodul und Objektausdehnungsmodul umfassen, die jeweils eingerichtet sind, die Objekttiefe 119 und die Objektausdehnung 121 zu bestimmen.

Die entsprechenden Module können jeweils als eigenständige künstliche Intelligenzen 125, beispielsweise neuronale Netze, ausgebildet sein. Alternativ können die verschiedenen Module Teile eines gesamten künstlichen neuronalen Netzes bilden, die gemäß aus dem Stand der Technik bekannten Strukturen zu einem gesamten neuronalen Netz verbunden sind.

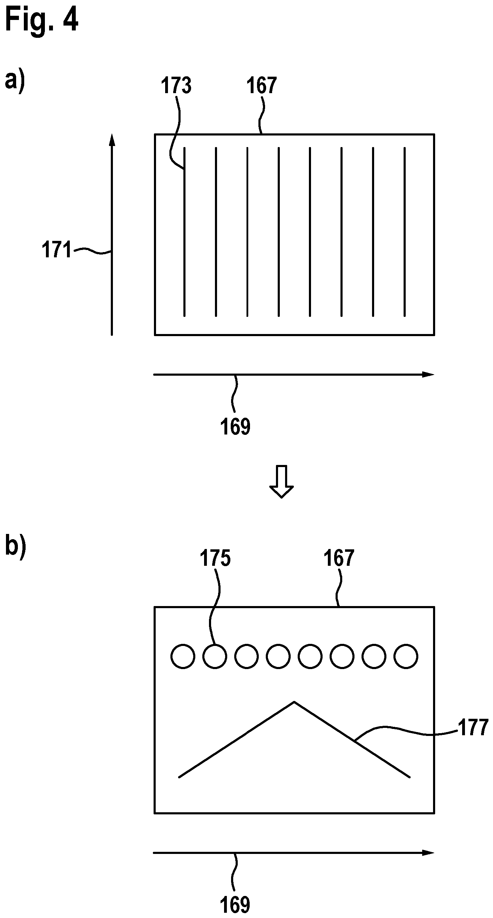

Fig. 4 zeigt eine schematische Darstellung einer Messung des Messgeräts 100 gemäß einer Ausführungsform.

Zur Vorverarbeitung können die Radardaten 103 bzw. die zusätzlichen Sensorinformationen 104 der übrigen Sensoren insbesondere zur numerischen Stabilisierung der nachfolgenden durch das Diagnosemodul 107 während der Wanddiagnose ausgeführten Schritte normalisiert werden. Hierzu können beispielsweise eine Amplitude und/oder Off-set-Kompensation ausgeführt werden. Ferner können zur Reduktion von Störelementen Filterung der Radardaten 103 und zur Reduktion der Datenrate die entsprechenden Sensordaten herabgetastet werden. Ferner können die Radardaten 103 bzw. die zusätzlichen Sensorinformationen 104 in den jeweilig benötigten Frequenzbereich bzw. Zeitbereich transformiert werden. Hierzu können aus dem Stand der Technik bekannte Verfahren angewendet werden.

Ferner können die aufgenommenen Radardaten 103 bzw. zusätzlichen Sensorinformationen 104 in zeitliche oder räumliche Fenster 167 aufgeteilt werden. Zeitliche Fenster 167 können hierbei durch das Aufnehmen der Radardaten 103 bzw. der zusätzlichen Sensorinformationen bzw. der vorverarbeiteten Radardaten 103 über ein festes Zeitintervall generiert werden. Räumliche Fenster 167 können hingegen aus einer Zuordnung der Radardaten 103 bzw. zusätzlichen Sensorinformationen 104 zu Positionen des Messgeräts 100 relativ zur Wand 105 entlang der Bewegungsrichtung 153 generiert werden.

Grafik a) der Fig. 4 zeigt eine derartige aus den oben beschriebenen Schritten ergebende Datenmatrix. Die in Grafik a) gezeigte Datenmatrix des Fensters 167 zeigt eine Mehrzahl von Sensordaten, die beispielsweise Radardaten 103 oder zusätzlichen Sensorinformationen 104 der weiteren Sensoren umfassen können, die entlang einer Frequenzkanalachse 171 bzw. entlang einer Raum-/Zeitachse 169 aufgetragen sind.

Eine Breite der zeitlichen Fenster 167 kann hierbei derart gewählt werden, dass unterschiedliche Abtastraten der Sensoren ausgeglichen werden können und häufig genug ein neues Fenster 167 bereitgestellt werden kann, sodass eine Anzeige der Diagnoseergebnisse 109 der Wanddiagnose in der Anzeigeeinheit 111 ohne eine zu große zeitliche Verzögerung während der durchgeführten Messung oder kurz nach Beendigung der Messung des Messgeräts 100 erfolgen kann.

Hierzu kann eine Rate von 2 bis 20 Fenster pro Sekunde der Datenaufnahme der Sensordaten vorteilhaft sein. Für räumliche Fenster können die räumlichen Abtastraten derart gewählt werden, dass die gewünschte örtliche Genauigkeit erreicht werden kann. Vorteilhaft können hierbei 1 mm bis 1 cm Abtastraten sein. Dies bedeutet, dass alle 1 mm bis 1 cm einer Bewegung des Messgeräts 100 entlang der Bewegungsrichtung 153 entsprechende Sensordaten aufgenommen werden.

Eine Breite der räumlichen Fenster 167 kann derart gewählt werden, dass zusammenhängende Informationen zu einem Objekt 113 in einem Fenster enthalten sind. Vorteilhaft kann hierbei eine Breite von 1 cm bis 20 cm der jeweiligen räumlichen Fenster 167 sein. Hieraus ergeben sich 4 bis 100 Messwerte pro Fenster 167. Dies ermöglicht eine weitere effiziente algorithmische Verarbeitung der entsprechend aufgenommenen Radardaten 103 bzw. zusätzlichen Sensorinformationen durch das Diagnosemodul 107.

Ein weiteres zeitliches Fenster 167 bzw. räumliches Fenster 167 kann hierbei bereitgestellt werden, sobald einer oder mehrere Abtastpunkte zur Verfügung stehen.

Das Diagnosemodul 107 kann derart ausgerichtet sein, dass als Eingabedaten, beispielsweise auch eines jeden Verarbeitungspfad 102 der Ausführungsform in

Figur 3, eine der Fenstergröße des jeweiligen räumlichen oder zeitlichen Fensters 167 entsprechende Matrix als Eingabedaten aufzunehmen. Die entsprechenden Eingabedaten können hierbei gemäß der Ausführungsform der Figur 2 die jeweils vorverarbeiteten Sensordaten, sprich Radardaten 103 und zusätzliche Sensorinformationen 104 der zusätzlichen Sensoren, umfassen.

Wie oben ausgeführt, kann die Wanddiagnose durch das Diagnosemodul 107 basierend auf einer entsprechend trainierten künstlichen Intelligenz ausgeführt werden. Alternativ können auch verschiedene Verarbeitungspfade durch Regelbasierte Algorithmen berechnet werden. Auch ist innerhalb eines Verarbeitungspfads 102 eine Kombination aus künstlicher Intelligenz und regelbasiertem Algorithmus in Form einer Parallelschaltung oder Verkettung möglich.

Die Diagnoseergebnisse 109 der Wanddiagnose können als Zahlenwerte, Vektoren oder Matrizen ausgeprägt sein. Ferner kann für die Objektdetektion die Wahrscheinlichkeit einer Detektion, bzw. für die Wandtypenklassifikation bzw. die Objektklassifikation eine Wahrscheinlichkeit der angegebenen Objektklassen bzw. Wandtypenklassen angegeben sein. Gleiches kann für die Positions- und/oder Tiefenbestimmung gelten, für die ebenfalls entsprechende Wahrscheinlichkeitswerte angegeben werden können.

Werden neben den Radardaten 103 die zusätzlichen Sensorinformationen der weiteren Sensortypen in einem Verarbeitungspfad 102 verarbeitet, so können diese entweder innerhalb der künstlichen Intelligenz 125 zusammengeführt oder durch regelbasierte Kombinationen kombiniert werden.

In der Nachverarbeitung jedes Verarbeitungspfads 102, der Ausführungsform in Fig. 3, können mehrere Algorithmusergebnisse, die auf mehreren Fenstern 167 basieren, durch das Zusammenfassungsmodul 165 zusammengefasst werden. Diese Zusammenfassung kann insbesondere durch Mehrheitsbildung, Summenbildung oder auch Multiplikation aufeinanderfolgender Wahrscheinlichkeitswerte realisiert werden.

Ferner kann durch Clustern von mehreren Ergebnissen, beispielsweise von mehreren nahe beieinander liegend detektierten Objekten, erkannt werden, bei welchen Objekten es sich um dasselbe Objekt handelt, sodass diese nicht fälschlicherweise mehrfach erkannt werden.

Ebenso ist es möglich, bei der Zusammenfassung der Ergebnisse aus mehreren Fenstern 167 multiplikativ eine Gewichtungsfunktion 177 anzuwenden. Vorteilhafterweise können hierbei die Diagnoseteilergebnisse 175, die entsprechenden Datenpunkten im Raum entsprechen, mit Bezug auf eine Positionierung der Diagnoseteilergebnisse 175 relativ zu einem Mittelpunkt des jeweiligen Fensters 167 gewichtet werden. Diese ist beispielhaft in der Grafik b) dargestellt, in der die einzelnen Diagnoseteilergebnisse 175 gemäß der gezeigten Gewichtungsfunktion 177 mit Bezug auf den Mittelpunkt des gezeigten Fensters 167 gewichtet sind.

Gemäß einer Ausführungsform können die Ergebnisse eines Verarbeitungspfads 102 nach der Nachverarbeitung 163 auf die Erweiterung eines anderen Verarbeitungspfad 102s Einfluss nehmen. Hierbei können Gewichtungsparameter angepasst werden, die für jedes Fenster von dem jeweiligen Ergebnis aus dem Verarbeitungspfad 102 abhängen können.

Beispielsweise kann das Ergebnis einer Objektklassifikation, in der der Objekttyp 117 eines in der Wand 105 angeordneten Objekts definiert ist, genutzt werden, um das Gewicht einer Wandtypenklassifikation, in der der Wandtyp 123 der jeweiligen Wand 105 bestimmt wird, in der Nachverarbeitung an Stellen ohne Objekte 113 zu erhöhen, da die jeweiligen Radardaten 103 an diesen Stellen weniger durch Reflektionen der Objekte 113 beeinflusst sind.

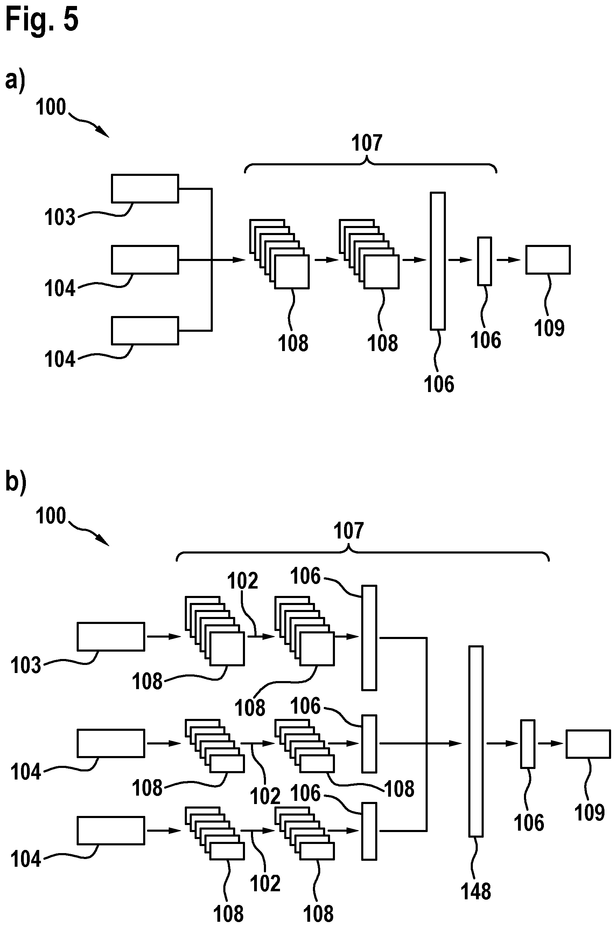

Fig. 5 zeigt eine weitere schematische Darstellung des Messgeräts 100 gemäß einer weiteren Ausführungsform.

Die Grafiken a) und b) der Fig. 5 zeigen zwei verschiedene Alternativen einer gemeinsamen Datenverarbeitung von Radardaten 103 und zusätzlichen Sensorinformationen 104 durch das Diagnosemodul 107.

In Grafik b) wird eine gemeinsame Verarbeitung der Radardaten 103 und der zusätzlichen Sensorinformationen 104 der zusätzlichen Sensoren durch das Diagnosemodul 107 dargestellt. Hierzu werden die Radardaten 103 und die zusätzlichen Sensorinformationen 104 gemeinsam als Eingabedaten des als künstliche Intelligenz, insbesondere als künstliches neuronales Netz, ausgebildet Diagnosemoduls 107 verwendet. Das Diagnosemodul 107 umfasst hier mehrere Faltungsschichten 108 und mehrere dichte Schichten 106. Über die Faltungsschichten 108 und die dichten Schichten 106 werden die Radardaten 103 und die zusätzlichen Sensorinformationen 104 gemeinsam als Eingabedaten verarbeitet. Als Ausgabedaten des Diagnosemoduls 107 werden hierauf basierend die oben bereits erwähnten Diagnoseergebnisse 109 erstellt.

In Grafik b) werden die Radardaten 103 und die zusätzlichen Sensorinformationen 104 hingegen als eigenständige Eingabedaten des Diagnosemoduls 107 verwendet. Das Diagnosemodul 107 wird zu mehrere Verarbeitungspfade 102. Die Verarbeitungspfade 102 umfassen jeweils mehrere Faltungsschichten 108 und wenigstens eine dichte Schicht 106. In den verschiedenen Verarbeitungspfaden 102 wird basierend auf den Radardaten 103 bzw. den zusätzlichen Sensorinformationen 104 getrennt voneinander jeweils eine Wanddiagnose durch das Diagnosemodul 107 erstellt.

In einer zusätzlichen Verkettungsschicht 148 werden die Teilergebnisse der Teildiagnosen der verschiedenen Verarbeitungspfade 102 zusammengefügt und einer letzten dichten Schicht 106 zugeführt. Die Ausgabedaten des Diagnosemoduls 107 entsprechen den oben beschriebenen Diagnoseergebnissen 109.

Das entsprechend ausgebildete Diagnosemodul 107 ist eingerichtet, basierend auf den Radardaten 103 und den zusätzlichen Sensorinformationen 104 eine wie oben beschriebene Wanddiagnose mit den oben beschriebenen Merkmalen auszuführen.

In der gezeigten Ausführungsform ist das Diagnosemodul 107 als ein künstliches neuronales Netz, insbesondere als ein Faltungsnetzwerk, ausgebildet. Entsprechende Netzwerkarchitekturen mit Faltungsschichten 108, dichten Schichten 106 und Verkettungsschichten 148 sind aus dem Stand der Technik bekannt.

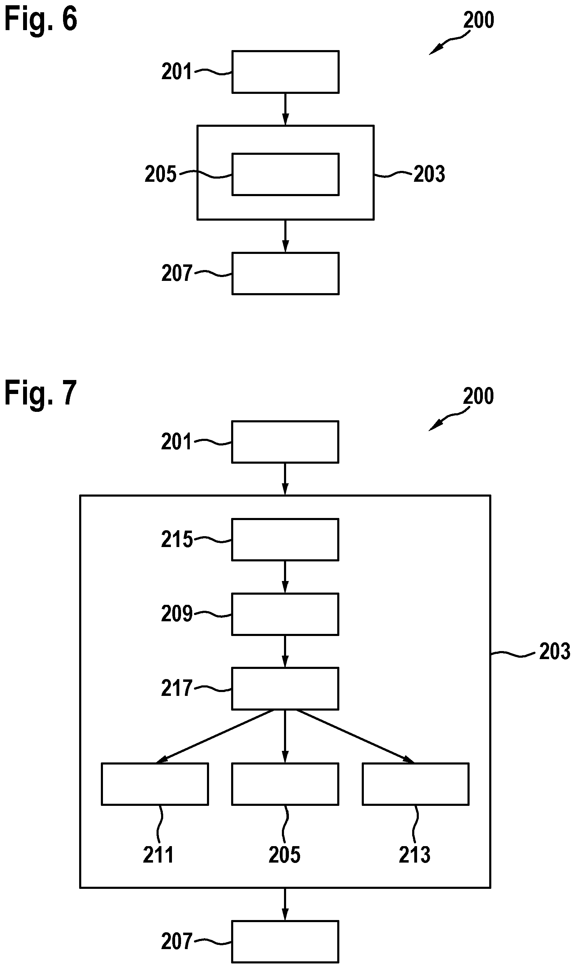

Fig. 6 zeigt ein Flussdiagramm eines Verfahrens 200 zum Betreiben eines Messgeräts 100 gemäß einer Ausführungsform.

Zum Betreiben des Messgeräts 100 werden in einem ersten Verfahrensschritt 201 zunächst Radardaten 103 einer Radarsensoreinheit 101 des Messgeräts 100 empfangen. Die Radardaten 103 bilden hierbei eine zu diagnostizierenden Wand 105 ab. Zusätzlich hierzu können zusätzliche Sensorinformationen 104 zusätzlicher Sensoren des Messgeräts 100 empfangen werden.

In einem weiteren Verfahrensschritt 203 wird darauffolgen durch das Diagnosemodul 107 des Messgeräts 100 basierend auf den Radardaten 103 bzw. den zusätzlichen Sensordaten 104 die Wanddiagnose durchgeführt, indem durch das Diagnosemodul 107 eine Analyse der Radardaten 103 bzw. zusätzlichen Sensorinformationen 104 ausgeführt und entsprechende Diagnoseergebnisse 109 bereitgestellt werden.

Hierzu wird in einem weiteren Verfahrensschritt 205 durch das Diagnosemodul 107 eine Objekterkennung eines in der Wand 105 angeordneten Objekts ausgeführt. Die Objekterkennung umfasst hierzu eine Objektdetektion, bei der eine Objektposition 115 des Objekts 113 in der Wand 105 bestimmt wird, und eine Objektklassifikation, bei der ein Objekttyp 117 des Objekts 113 bestimmt wird.

In einem weiteren Verfahrensschritt 207 werden die Diagnoseergebnisse 109 der Wanddiagnose in einer Anzeigeeinheit 111 des Messgeräts 100 angezeigt. Die Diagnoseergebnisse 109 umfassen hierbei wenigstens die Objektposition 115 in der Wand 105 und den Objekttyp 117 des Objekts 113.

Fig. 7 zeigt ein weiteres Flussdiagramm des Verfahrens 200 zum Betreiben eines Messgeräts 100 gemäß einer weiteren Ausführungsform.

Die gezeigte Ausführungsform basiert auf der Ausführungsform in Fig. 6 und umfasst alle dort beschriebenen Merkmale.

In der gezeigten Ausführungsform umfasst der Verfahrensschritt 203 zunächst einen Verfahrensschritt 215. Im Verfahrensschritt 215 wird durch ein erstes Vorverarbeitungsmodul 135 eine Vorverarbeitung der Radardaten 103 bzw. der zusätzlichen Sensorinformationen 104 durchgeführt und Eingabedaten 133 an ein Wandtypenklassifizierungsmodul 129 bereitgestellt. Hierzu kann das erste Vorverarbeitungsmodul 135 gemäß der Ausführungsform in Figur 2 eine S-Matrix Reduktion 155 ausführen.

In einem Verfahrensschritt 209 wird durch das Wandtypenklassifizierungsmodul 129 basierend auf den Eingabedaten 133 eine Wandtypenklassifikation ausgeführt und ein Wandtyp 123 der zu untersuchenden Wand 105 bestimmt.

Ferner wird durch das Wandtypenklassifizierungsmodul 129 eine Wandtypinformation 139 bereitgestellt, die den zuvor ermittelten Wandtyp 123 der Wand 105 umfasst.

In einem weiteren Verfahrensschritt 217 wird durch ein zweites Vorverarbeitungsmodul 137 eine Vorverarbeitung der Radardaten 103 bzw. zusätzlichen Sensorinformationen 104 unter Berücksichtigung der durch das Wandtypenklassifizierungsmodul 129 bereitgestellten Wandtypinformation 139 ausgeführt. Hierzu kann gemäß der Ausführungsform in Fig. 2 das zweite Vorverarbeitungsmodul unter Berücksichtigung der Wandtypinformation 139 eine Hintergrundkorrektur 157 der Radardaten 103 bzw. zusätzlichen Sensorinformationen 104 durchführen. In der Hintergrundkorrektur wird die Information des Wandtyps 123 der Wand zur Korrektur der Radardaten 103 bzw. zusätzlichen Sensorinformationen 104 verwendet.

In Abhängigkeit des jeweils vorliegenden Wandtyps 123 der zu untersuchenden Wand können Abweichungen der empfangenen Radardaten 103 bzw. Sensorinformationen 104 auftreten. Diese können unter Berücksichtigung des vorliegenden Wandtyps 123 korrigiert werden, sodass die korrigierten Radardaten 103 bzw. zusätzlichen Sensorinformationen 104 wandtypenunabhängige Informationen bereitstellen.

Ferner kann durch das zweite Vorverarbeitungsmodul 137 eine inverse Fast Fourier Transformation 159 der Wandtyp korrigierten Daten ausgeführt werden. Zusätzlich kann eine Fokussierung und Migration 161 ausgeführt werden. Hierauf basierend werden durch das zweite Vorverarbeitungsmodul 137 Eingabedaten 133 an ein Objekterkennungsmodul 131 bereitgestellt.

In Verfahrensschritt 205 führt das Objekterkennungsmodul 131 auf den Eingabedaten 133 die Objekterkennung des in der Wand 105 angeordneten Objekts 113 inklusive der Objektdetektion und der Objektklassifikation durch.

Ferner kann in einem Verfahrensschritt 211 eine Objekttiefenbestimmung einer Objekttiefe 119 des Objekt 113 in der Wand 105 ausgeführt werden. Diese kann wiederum durch das entsprechend ausgebildete Objekterkennungsmodul 131 bestimmt werden. Die Objekttiefe beschreibt hierbei einen Abschnitt des Objekts 113 zu einer Oberfläche der Wand 105.

Ferner kann in einem Verfahrensschritt 213 eine Objektausdehnung 121 des Objekts 113 entlang einer vordefinierten Richtung durch das Objekterkennungsmodul 131 bestimmt werden.

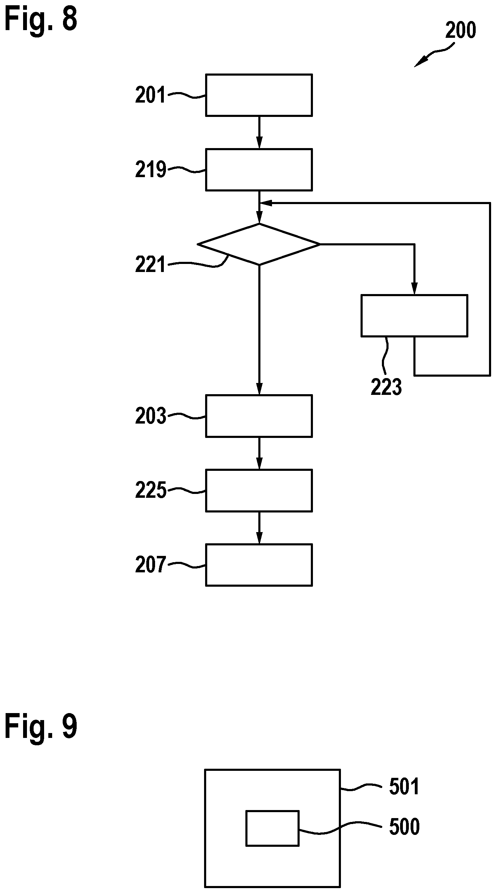

Fig. 8 zeigt ein weiteres Flussdiagramm des Verfahrens 200 zum Betreiben eines Messgeräts 100 gemäß einer weiteren Ausführungsform.

Die gezeigte Ausführungsform basiert auf den Ausführungsformen der Fig. 6, 7 und umfasst alle dort beschriebenen Merkmale.

In der gezeigten Ausführungsform werden zunächst in einem Verfahrensschritt 219 Bewegungsdaten einer Bewegungserfassungseinheit 141 des Messgeräts 100 empfangen. Die Bewegungsdaten bilden hierbei eine Bewegung des Messgeräts 100 relativ zur Wand 105 zwischen einer Mehrzahl von Positionen des Messgeräts 100 relativ zur Wand 105 ab.

In einem weiteren Verfahrensschritt 221 wird basierend auf den Bewegungsdaten der Bewegungserfassungseinheit 141 überprüft, ob eine Bewegung des Messgeräts 100 relativ zur Wand 105 um eine vordefinierte Entfernung erfasst wurde.

Falls keine solche Bewegung des Messgeräts 100 relativ zur Wand 105 erfasst wurde, werden in einem Verfahrensschritt 223 die Radardaten 103 bzw. die zusätzlichen Sensorinformationen 104, die in einem Zeitraum zwischen einer vorhergehenden Überprüfung und der zuletzt stattgefundenen Überprüfung gespeichert. Ferner wird eine erneute Überprüfung der Bewegung ausgeführt.

Falls eine derartige Bewegung des Messgeräts 100 relativ zur Wand 105 um die vordefinierte Entfernung erfasst wurde, wird die Wanddiagnose gemäß den oben beschriebenen Ausführungsformen basierend auf den Radardaten 103 bzw. den zusätzlichen Sensorinformationen 104 durch das Diagnosemodul 107 ausgeführt. Die Wanddiagnose wird hierbei während des Bewegens des Messgeräts 100 relativ zur Wand ausgeführt. Hierbei wird die Wanddiagnose in mehreren nacheinander ausgeführter Abschnitte unterteilt und in den verschiedenen Abschnitten werden Teilergebnisse der Wanddiagnose ermittelt. Die Teilergebnisse beschreiben hierbei Teilobjekte, die während der Objekterkennung durch das Diagnosemodul 107 erkannt werden.

Die Teilobjekte können beispielsweise Teilabschnitte eines zusammenhängenden Objekts 113, da während des Bewegens des Messgeräts 100 relativ zur Wand 105 durch das Messgerät 100 abgescannt wird. Die Abschnitte des zusammenhängenden Objekts 113, die durch die Teilobjekte dargestellt sind, ergeben sich hierbei durch die vordefinierten Entfernungen, die während des Bewegens des Messgeräts 100 relativ zur Wand 105 durch das Messgerät 100 zurückgelegt werden.

In einem weiteren Verfahrensschritt 225 werden die während der Wanddiagnose erkannten Teilobjekte zu einem zusammenhängenden Objekt 113 zusammengefügt. Das Zusammenfassen bzw. Zusammenfügen der Teilobjekte zu dem zusammenhängenden Objekt 113 erfolgt vor allem, falls zwischen den Teilobjekten eine vordefinierte Abstandsabhängigkeit besteht. Die Abstandsabhängigkeit beschreibt, dass die Teilobjekte jeweils Teile des zusammenhängenden Objekt 113 sind.

Das Zusammenfassen der Teilergebnisse kann sich auch auf die getrennte Verarbeitung in Verarbeitungspfaden 102 gemäß der Ausführungsformen der Fig. 3 und 5 beziehen, in denen die Radardaten 103 und die zusätzlichen Sensorinformationen 104 getrennt in getrennt voneinander ausgeführten Verarbeitungspfaden 102 verarbeitet werden. Die in den Verarbeitungspfaden 102 erstellten Teilergebnisse werden darauffolgend zum Gesamtergebnis zusammengefasst.

Ferner können die Teilergebnisse auf die unterschiedlichen Aspekte der Wanddiagnose bezogen sein. So können die Objektposition 115, der Objekttyp 117, die Objekttiefe 119 und/oder die Objektausdehnung 121, wie dies in der Ausführungsform zu Fig. 3 beschrieben ist, in unterschiedlichen Verarbeitungspfaden 102 als eigenständige Teilergebnisse ermittelt werden. In der Zusammenfassung können die verschiedenen Teilergebnisse zu einem Gesamtergebnis zusammengeführt werden, dass ein zusammenhängendes Objekt 113 eines ermittelten Objekttyps 117 und einer ermittelten Objektausdehnung 121, das in einer ermittelten Objekttiefe 119 an einer Objektposition 115 in der Wand 105 angeordnet ist.

Wie oben bereits beschrieben, kann die Wanddiagnose durch das Messgerät 100 basierend auf Fenstern 167 der Radardaten 103 bzw. zusätzlichen Sensorinformationen 104 ausgeführt werden. Die Fenster 167 beschreiben hierbei einen Raumbereich der zu untersuchenden Wand 105, der durch eine Aufnahme der Radardaten 103 bzw. zusätzlichen Sensorinformationen 104 durch das Messgerät 100 in einer bestimmten Positionierung relativ zur Wand 105 aufgenommen wird. Bei Bewegung des Messgeräts 100 relativ zur Wand werden zeitlich nacheinander mehrere Fenster 167 aufgenommen, die, gegebenenfalls überlappend, zusammenhängend einen Raumbereich der Wand 105 abbilden, der durch die Bewegung des Messgeräts 100 relativ zur Wand 105 überstrichen wurde.

Durch Zusammenfügen der verschiedenen Fenster 167 kann somit der zusammenhängende Raumbereich durch die Wanddiagnose untersucht werden und ein in dem Raumbereich angeordnetes Objekt 113 als zusammenhängendes Objekt detektiert und klassifiziert werden. Die Zusammenführung der mehreren Fenster 167 kann beispielsweise durch eine Haufenbildung (Clustering) an mehreren Messpunkten erfolgen. Die Messpunkte beschreiben hierbei Positionierungen des Messgeräts 100 relativ zur Wand, an denen Radardaten 103 bzw. zusätzliche Sensorinformationen 104 aufgenommen wurden.

Die Fenster 167 werden dann mittels der Haufenbildung fusioniert, falls die Messpunkte, an denen die jeweiligen Fenster 167 aufgenommen wurden, aufgrund eines vorbestimmten geometrischen Abstandes der Messpunkte zueinander als zusammenhängend angesehen werden. Dieses Zusammenfügen bzw. Fusionieren kann auch als Gruppieren verstanden werden. In den einzelnen Fenstern 167 kann jeweils ein Objekt 113 detektiert werden, falls ein solches Objekt 113 vorhanden ist. Alternativ wird in einem Fenster 167 kein solches Objekt 113 detektiert. Bei Detektion eines Objekts 113 wird darauffolgend die Objektposition 115, der jeweilige Objekttyp 117, die Objekttiefe 119 und/oder die Objektausdehnung 121 ermittelt.

In dem ein ausgedehntes in der Wand 105 angeordnetes Objekt 113 durch Bewegung des Messgeräts 100 relativ zur Wand 105 überfahren und entsprechende Daten aufgenommen werden, kann das Objekt 113 aus verschiedenen Blickrichtungen abgetastet werden. Hierdurch kann eine Datenvarianz erhöht und eine robustere Objekterkennung bewirkt werden.

Gemäß einer Ausführungsform ist das Diagnosemodul 107 als eine entsprechend trainierte künstliche Intelligenz ausgebildet, die eingerichtet ist, die oben beschriebene Wanddiagose auszuführen. Ein Training der künstlichen Intelligenz kann hierbei gemäß den aus dem Stand der Technik bekannten Trainingsverfahren ausgeführt sein.

Die für das Training verwendete Trainingsdatensätze können hierzu Radardaten 103 und gegebenenfalls zusätzliche Sensorinformationen 104 umfassen, die jeweils Wände 105 verschiedener Wandtypen 123 mit verschiedenen in den Wänden 105 angeordneten Objekten 113 unterschiedlicher Objekttypen 117 abbilden, die jeweils an unterschiedlichen Objektpositionen 115 in unterschiedlichen Objekttiefen 119 in den Wänden 105 angeordnet sind und verschiede Objektausdehnungen 121 umfassen.

Die entsprechenden Daten der Trainingsdatensätze sind hierbei durch ein charakteristisches Labelingverfahren gelabelt, wodurch die jeweiligen Daten bezüglich des jeweiligen Wandtyps 123, eines Vorhandenseins eines Objekts 113, einer Objektposition 115, eines Objekttyps 117, einer Objekttiefe 119 und/oder einer Objektausdehnung 121 klassifiziert sind. Die jeweiligen Radardaten 103 bzw. zusätzlichen Sensorinformationen 104 können beispielsweise auf tatsächlichen Messungen eines entsprechenden Messgeräts 100 von realen Wänden 105 basieren.

Hierzu können zum Zweck des Erzeugens von Trainingsdatensätzen entsprechende Messgeräte 100 verwendet werden, um von realen Wänden 105 mit realen darin angeordneten Objekten 113 entsprechende Datensätze aufzunehmen. Alternativ oder zusätzlich können die Daten der Trainingsdatensätze Labordaten umfassen, die beispielsweise lediglich entsprechende Radardaten 103 bzw. zusätzliche Sensorinformationen 104 von Wänden 105 mit Objekten 113 simulieren.

Alternativ oder zusätzlich hierzu können die Daten der Trainingsdatensätze auf Messungen von Messgeräten 100 basieren, die auf vorpräparierten Laborwände ausgeführt wurden, wobei in den Laborwänden die Objektpositionen 115, Objekttypen 117, Objekttiefen 119 und/oder Objektausdehnungen 121 der in den Wänden 105 angeordneten Objekten 113 wie auch die Wandtypen 123 der Wände 105 bekannt sind.

Das Training der künstlichen Intelligenz 125 kann hierbei darauf ausgerichtet sein, eine Objekterkennung inklusive einer Objektdetektion und Objektklassifikation der Objekte 113 auszuführen. Die künstliche Intelligenz 125 kann ferner darauf trainiert werden, den Wandtyp 123 zu bestimmen. Die künstliche Intelligenz 125 kann ferner darauf trainiert werden, die Objekttiefe 119 zu bestimmen. Die künstliche Intelligenz kann ferner darauf trainiert sein, die Objektausdehnung 121 zu bestimmen.

Alternativ kann das Diagnosemodul 107 mehrere künstliche Intelligenzen 125 umfassen, die jeweils darauf trainiert sind die Objekterkennung, die Wandtypenklassifikation, das Bestimmen der Objekttiefe oder das Bestimmen der Objektausdehnung auszuführen.

Fig. 9 zeigt eine schematische Darstellung eines Computerprogrammprodukts 500, umfassend Befehle, die bei der Ausführung des Programms durch eine Datenverarbeitungseinheit diese veranlassen, das Verfahren 200 zum Betreiben eines Messgeräts 100 auszuführen.

Das Computerprogrammprodukt 500 ist in der gezeigten Ausführungsform auf einem Speichermedium 501 gespeichert. Das Speichermedium 501 kann hierbei ein beliebiges aus dem Stand der Technik bekanntes Speichermedium sein.

## Patentansprüche

1. Computerimplementiertes Verfahren (200) zum Betreiben eines Messgeräts (100), insbesondere eines Wanddiagnosegeräts, umfassend:
Empfangen (201) von Radardaten (103) einer Radarsensoreinheit (101) des Messgeräts (100), wobei die Radardaten (103) eine zu diagnostizierende Wand (105) abbilden;
Ausführen (203) einer Wanddiagnose durch Ausführen einer Analyse der Radardaten (103) und Bereitstellen von Diagnoseergebnissen (109) durch ein Diagnosemodul (107) des Messgeräts (100), wobei die Wanddiagnose umfasst:
Ausführen (205) einer Objekterkennung eines in der Wand (105) angeordneten Objekts (113) durch das Diagnosemodul (107), wobei die Objekterkennung eine Objektdetektion und eine Objektklassifikation umfasst; und
Bereitstellen (207) der Diagnoseergebnisse (109) des Diagnosemoduls (107) an eine Anzeigeeinheit (111) des Messgeräts (100) zum Anzeigen der Diagnoseergebnisse (109) einem Nutzer des Messgeräts (100), wobei Diagnoseergebnisse (109) wenigstens eine Objektposition (115) in der Wand (105) und einen Objekttyp (117) des Objekts (113) umfassen.

2. Verfahren (200) nach Anspruch 1, wobei die Wanddiagnose ferner umfasst: Ausführen (209) einer Wandtypenklassifikation und Bestimmen eines Wandtyps (123) der Wand (105) durch das Diagnosemodul (107).

3. Verfahren (200) nach Anspruch 1 oder 2, wobei die Wanddiagnose ferner umfasst:
Ausführen (211) einer Objekttiefenbestimmung und Bestimmen einer Objekttiefe (119) des Objekts (113) in der Wand (105) durch das Diagnosemodul (107), wobei die Objekttiefe (119) als ein Abstand des Objekts (113) zu einer Oberfläche der Wand (105) definiert ist.

4. Verfahren (200) nach einem der voranstehenden Ansprüche, wobei die Analyse der Radardaten (103) ferner umfasst:
Ausführen (213) einer Objektausdehnungsbestimmung und Bestimmen einer Objektausdehnung (121) des Objekts (113) entlang einer vordefinierten Richtung durch das Diagnosemodul (107).

5. Verfahren (200) nach einem der voranstehenden Ansprüche, wobei die Wanddiagnose ferner umfasst:
Ausführen (215) einer Vorverarbeitung der Radardaten (103) der Radarsensoreinheit (101) und Bereitstellen von Eingabedaten (133) für ein Wandtypenklassifizierungsmodul (129) des Diagnosemoduls (107) durch ein erstes Vorverarbeitungsmodul (135);
Ausführen (209) der Wandtypenklassifikation basierend auf den durch das erste Vorverarbeitungsmodul (135) bereitgestellten Eingabedaten (133) und Bereitstellen einer Wandtypinformation (139) durch ein Wandtypenklassifizierungsmodul (129) des Diagnosemoduls (107);
Ausführen (217) einer Vorverarbeitung der Radardaten (103) und Bereitstellen von Eingabedaten (133) für ein Objekterkennungsmodul (131) des Diagnosemoduls (107) unter Berücksichtigung der Wandtypinformation (139) durch ein zweites Vorverarbeitungsmodul (137) des Diagnosemoduls (107);
Ausführen (205) der Objekterkennung basierend auf den durch das zweite Vorverarbeitungsmodul (137) bereitgestellten Eingabedaten (133) und Bereitstellen von Diagnoseergebnissen durch das Objekterkennungsmodul (131).

6. Verfahren (200) nach einem der voranstehenden Ansprüche, wobei Radardaten (103) von einer Mehrzahl von Positionen des Messgeräts (100) relativ zur Wand (105) empfangen werden, und wobei das Verfahren (200) ferner umfasst:
Empfangen (219) von Bewegungsdaten einer Bewegungserfassungseinheit (141) des Messgeräts (100), wobei die Bewegungsdaten eine Bewegung des Messgeräts (100) relativ zur Wand (105) zwischen der Mehrzahl von Positionen des Messgeräts (100) relativ zur Wand (105) abbilden.

7. Verfahren (200) nach einem der voranstehenden Ansprüche, ferner umfassend:
Überprüfen (221) basierend auf den Bewegungsdaten der Bewegungserfassungseinheit (141), ob eine Bewegung des Messgeräts (100) relativ zur Wand (105) um eine vordefinierte Entfernung erfasst wurde;
Falls keine Bewegung erfasst wurde, Speichern (223) der Radardaten (103) und erneutes Ausführen der Überprüfung;
Falls eine Bewegung um die vordefinierte Entfernung erfasst wurde, Ausführen (203) der Wanddiagnose basierend auf den Radardaten (103) durch das Diagnosemodul (107).

8. Verfahren (200) nach einem der voranstehenden Ansprüche, wobei die Wanddiagnose ferner umfasst:
Zusammenfassen (225) von basierend auf Radardaten (103), die in verschiedenen Positionen des Messgeräts (100) relativ zur Wand (105) empfangen wurden, detektierten und klassifizierten Teilobjekten zu einem zusammenhängenden Objekt (113), falls zwischen den Teilobjekten eine vordefinierte Abstandsabhängigkeit besteht.

9. Verfahren (200) nach einem der voranstehenden Ansprüche, wobei das Messgerät (100) ferner wenigstens einen Induktionssensor und/oder einen Wirbelstromsensor und/oder einen Kapazitätssensor und/oder Wechselstromsensor und/oder ein NMR-Sensor und/oder einen Ultraschallsensor zum Bereitstellen zusätzlicher Sensordaten umfasst, und wobei das Diagnosemodul (107) eingerichtet ist, die Wanddiagnose unter Berücksichtigung der zusätzlichen Sensordaten auszuführen.

10. Verfahren (200) nach einem der voranstehenden Ansprüche, wobei das Diagnosemodul (107) wenigstens eine entsprechend trainierte künstliche Intelligenz (125) umfasst, die eingerichtet ist, basierend auf den Radardaten (103) und/oder den zusätzlichen Sensordaten eine Objekterkennung und/oder eine Wandklassifikation und/oder eine Objekttiefenbestimmung durchzuführen.

11. Recheneinheit (151), die eingerichtet ist, das Verfahren (200) zum Betreiben eines Messgeräts (100) nach einem der voranstehenden Ansprüche 1 bis 10 auszuführen.

12. Computerprogrammprodukt (500) umfassend Befehle, die bei der Ausführung des Programms durch eine Datenverarbeitungseinheit diese veranlassen, das Verfahren (200) zum Betreiben eines Messgeräts (100) nach einem der voranstehenden Ansprüche 1 bis 10 auszuführen.
